# EUROPEAN PATENT SPECIFICATION

(11) **EP 3 472 110 B1**
(45) Date of publication and mention of the grant of the patent: **07.06.2023**
(21) Application number: 17814107.3
(22) Date of filing: 15.06.2017
(51) Int. Cl.: C03B 37/01, C03B 37/06, C03C 13/00, C03C 13/06, C03B 3/02, C03B 5/02, C03B 7/07, C03B 37/02, C03B 37/083, C03B 37/09

(54) **APPARATUS AND PROCESS FOR PRODUCING FIBER FROM IGNEOUS ROCK**
VORRICHTUNG UND VERFAHREN ZUR HERSTELLUNG VON FASERN AUS ERUPTIVGESTEIN
APPAREIL ET PROCÉDÉ DE PRODUCTION D'UNE FIBRE À PARTIR D'UNE ROCHE IGNÉE

(30) Priority: 16.06.2016 US 201662350832 P
(43) Date of publication of application: 24.04.2019
(60) Divisional application: 23159503.4
(73) Proprietor: Biland, Oleksandr, Richmond, TX 77407 (US); Ferguson, Robert Bruce, Sr., Richmond, TX 77407 (US)
(72) Inventor: Biland, Oleksandr, Richmond, TX 77407 (US); Ferguson, Robert Bruce, Sr., Richmond, TX 77407 (US)
(74) Representative: Jones, Nicholas Andrew
(86) International application number: PCT/US2017/037718
(87) International publication number: WO 2017/218800

(56) References cited:
- WO-A1-98/11029
- CN-A- 1 513 782
- DE-A1-102008 004 739
- GB-A- 627 863
- KR-A- 20150 011 074
- RU-C1- 2 082 684
- US-A- 4 720 295
- US-A1- 2006 287 186
- US-A1- 2007 000 721
- US-B2- 8 347 655
- US-B2- 8 806 900

## Description

### Background of the Invention

One of the primary challenges of making fibers from igneous rock is the complex mineral structure of igneous rock. Typical igneous rocks that are suitable for fiber formation are complexes of feldspars, quartz, feldspathoids, olivines, pyroxenes, amphiboles, and micas. A number of geological studies of the mineral composition of igneous rocks in the USA, Saudi Arabia, Japan, Russia, Ukraine and Kirgizstan, furthermore, revealed that the majority of existing igneous rock deposits contains some quantity of infusible minerals such as quartz, forsterite, corundum, zirconium and the like randomly distributed throughout the rock deposit. The presence of such minerals in the raw material causes inefficiencies in the continuous rock fiber manufacturing process by interrupting the attenuation process, increasing fiber breakages, and choking the bushings. Also, crystalline particles in the fibers are concentrators of tensions that can significantly reduce the tensile strength and the module of elasticity of continuous fibers. These problems result in fibers of significantly decreased quality since the quality of the fibers depends on the chemical composition of the raw materials and on achieving an homogenous melt of the rock, free of non-molten particles.

A number of these problems with producing an homogenous melt are based on the variety of melting temperatures of minerals found in raw igneous deposits. For example, the melting temperatures of the various minerals include forsterite at 1890° C; quartz at 1728° C; corundum at 2050° C; and zirconium at 2125° C. The presence of these minerals cannot be tolerated for conventional industrial scale technologies since there are no refractories on the market that can withstand such temperatures and attain a reasonable lifetime campaign for the melting furnace. Conventional manufacturing thus requires large expenditures of time and resources just to discover suitable rock deposits to be used as feedstocks.

Achieving an homogenous melt of igneous rocks is also difficult because of the natural darkness of the material. Unlike conventional (artificial) glasses, igneous rocks that are appropriate for fiber formation typically have a complicated mineral structure. Feldspars, quartz or feldspathoids, olivines, pyroxenes, amphiboles, and micas, for example are basic minerals in the formation of such igneous rocks. Additionally, the high content of rock formation oxides such as FeO and Fe₂O₃ makes the melted form of igneous rocks dark (not transparent). This darkness prevents radiant heat generated by gas/fuel burners that are normally located above the melt level from substantially penetrating into the melt. As a result, significant gradients of temperatures and viscosities are prevalent from the top to the bottom of the rock melt in conventional processes. These gradients of temperature can prevent homogenization because a decrease in temperature of 150° C, for example, can produces a 5 to 8 fold increase in viscosity of the melt as described in chapters 3 and 3 or Dzhigiris, et al. "Basics of basalt fibers production," Teploenergetic, 2002. Using a radiant heat source as described, therefore, requires vigorous stirring of molten rocks and/or implementation of a heat source internal to the melt to improve mass and heat transfer throughout the entire melt. This need to improve heat transfer drives the designs of basically all conventional industrial scale furnaces for melting igneous rocks.

Most furnaces that melt igneous rocks as feedstock for manufacturing fibers are the so-called tank-type large furnaces with melting areas from 3 to 80 square meters . These furnaces often employ fossil fuel burners and/or electrodes made of materials such as tin, molybdenum or graphite for heating the melt. Examples of such furnaces are described in Trier, "Glass Furnaces, Design Construction and Operation," Society of Glass Technology, 2000, (chps, 2, 6 and 8), Lowenstein, "Manufacturing Technology of Continuous Glass Fibres," Elsevier Science Publishers B.V 1983 (chp. 4) and in the following patent documents, US07530240, US08037719, US08042362, US08414807, US20050103058, US20050223752, US200520060218972, US200520080179779, US20120104306, CN103043897, CN104211296, CN104291551, CN202808558, CN202849233, CN203033871, CN203256109, CN203397236, CN203429057, CN203960029, CN202543025, CN204079775, CN204097308, CN204097326, CN204097327, and UA88150.

CN1513782A discloses an induction heating method for smelting basaltic lava ore in order to produce fibres. It comprises S1 and S2 induction heating furnaces and a nozzle bushing device for fiber production.

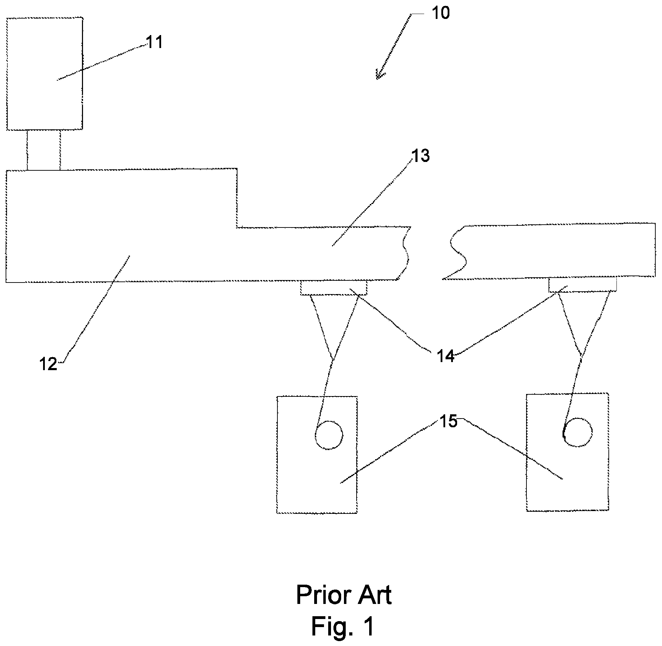

The basic elements of conventional technology for industrial scale furnaces for melting igneous rocks are illustrated in Fig. 1. In a typical furnace system 10, there is a fore-chamber (11) that can be used for preheating of raw materials or pre-melting; a melting chamber (12) that can include one or more connected parts and is normally used for homogenization; a forehearth (13) and extrusion chambers (14) where fiber forming devices/bushings are placed; and winding apparatuses (15) under the fiber forming devices.

As stated above, achieving a homogenous melt is a primary challenge in producing fibers and is a particular problem for conventional furnaces that rely on gas burners or internal electrodes for heating. Several methods for stirring a molten rock mass have been used in attempts to achieve a more homogenous temperature distribution. Bubbling, for example, is used in most conventional furnaces (see Dzhigiris, Loewenstein, Trier, cited above). This method typically requires installation of one or several rows of bubblers (tubes) across the width at the bottom of the furnace. The flow of hot air supplied through the bubblers helps to provide an upward current through the molten rock. While this method can provide an effective stirring effect, the method has disadvantages such as significantly increasing wear of expensive refractory metals in the melting zone of the furnace. This wear is due to the intensive melt currents at such high temperatures which greatly increase the rock melt/refractory interaction, reducing furnace life time. Installation of bubblers also requires institution of additional safeguard measures since bubblers tend to become chocked (blocked) and unserviceable. Reliable bubblers are also expensive since they are typically made of Platinum-Rhodium (Pt-Rh) alloy, significantly increasing the capital required to manufacture the furnace.

A second method of improving mass and heat transfer throughout a melt volume is installation of heating elements inside the melting zone. Various types of electrode heating elements are widely used in the glass industry (see Trier and Loewenstein, cited above), and they are used or at least proposed for use in melting igneous rocks (US Patent No. 6,647,747). Although decades of research has been conducted to design electrodes for use in an igneous rock melt, many significant difficulties remain unresolved, including many of the same or similar problems caused by the use of bubblers. For example, uneven distribution of heat between cylindrical electrodes requires special electrical and mechanical arrangements. Plate electrodes, however, are unserviceable and usually require the expense of complete furnace shutdown for replacement. In addition, the aggressiveness of rock melt can wear the electrodes twice as fast as electrodes in a glass furnace, and electrode heating elements can significantly increase both capital and operating expenses since this approach requires an advanced electrical system and special teams of qualified personnel for daily servicing of the electrode system.

Yet another method known in the art for improving heat and mass transfer in melting igneous rock is to apply mechanical stirrers, weirs and various geometrical arrangements. Mechanical stirrers are often used in conventional glass furnaces (see e.g. Trier) and are commercially available for such use. However, the lifetime of such stirrers can be short due to the corrosiveness of the melt and can be further shortened with the increase in operating temperatures required for igneous rock. Development of fusion cast refractory materials has resulted in only a slight improvement in operating life time. Neither has the installation of weirs (Trier) or special vertical cascading holes (US Patent No. 6,647,747), used in promoting glass body homogenizing offered any significant improvement.

The preceding discussion makes it clear that technology used in glass fiber production does not transfer easily or simply to the production of fibers from igneous rock, at least because of the heterogenous nature of the starting material and its varied melting points, the difficulty in achieving and maintaining a homogenous melt due to the darkness of rock melt versus glass, and the higher melt temperatures required for igneous rock. There is still a need, therefore for systems and methods of producing good quality fibers through achieving a homogenous melt of igneous rocks that are both effective and cost efficient.

Another problem with conventional systems and methods is the expense of the fiber forming devices. Conventional fiber forming technologies require expensive bushings made of materials such as Pt-Rh. The maximum number of tip bushings available for rock fiber formation is believed to be 1200 as compared to 6000 tip bushings for use in fiberglass production. The number of tips is limited with conventional technology because of the darkness of rock melt which makes maintenance of homogeneity difficult as described above. Additionally, the temperature interval of fiber formation is narrow compared to conventional glasses, as for example, the interval of allowed variance is 20° to 70° or in some examples, 30° to 60° C for rock versus 180° to 200° C for glass. This narrow tolerance makes the fiber formation from rock very sensitive to temperature gradients. Furthermore, the presence of iron oxides in igneous rocks increases the wettability of Pt-Rh plate by rock melt, requiring the distance between tips of rock fiber bushings to be almost twice as far as the distance between tips of conventional glass bushings. Based on bushing geometry limitations and the cost of Pt-Rh, a typical bushing for rock fibers has only one quarter of the number of bushings as do bushings of the same size for conventional glass fibers, resulting in a four-fold reduction in production capacity as compared to glass.

Fiber-forming devices for continuous mineral fibers widely known as bushings have been a significant challenge in rock fiber manufacturing technology due to basically the same reasons mentioned above, i.e., the complex mineral structure of raw materials (rocks) and high level of iron oxides content.

The first attempts to design bushings for producing continuous mineral fibers were made in the 1960's in the Soviet Union. Rock melt bushings that basically copy the design of glass fiber bushings have not had much success. Difficulties in obtaining uniformity of composition and temperature melt and brining to the bushing plate have led to process instability, high levels of filaments breakages and overall process inefficiencies.

The first bushings appropriate for the manufacturing of continuous mineral fibers on an industrial scale was introduced to the industry at the beginning of the 1980's (see, e.g. SU1211230, SU461908). The basic feature of that bushing design was the presence of an additional electric heater in the form of a tube (downstream pipe), which was placed into the basalt melt at the bottom of the forehearth and extended to a regular fiber-forming bushing beneath the forehearth. The pipe thus took basalt melt from a single small spot in the forehearth, and delivered material from that location in the forehearth to the bushings based on the assumption that material from that single location could be considered as having uniform composition and temperature.

This conventional design has many limitations. First, the diameter of the downstream pipe cannot be large enough to supply a sufficient amount of melt to the bushing plate to have a competitive production capacity compared to conventional fiberglass technology. Rock melt (and basalt in particular) has up to 15% iron oxides resulting in a dark melt that is not transparent like glass melt. The heat in the pipe is thus limited to conduction heat as there can be essentially no radiation or convection heat transfer in the dark melt. Because the pipe's wall is heated electrically and heat transfer is all by conduction, the melt is typically overheated at the "wall-melt" contact point and the temperature of the melt decreases exponentially toward the center axis of the pipe. The diameter of the pipe is thus limited by the need to deliver the melt to the bushing (orifice) plate as close as possible to a uniform temperature (and thus viscosity). Despite much research and development directed to overcoming the obvious limitations of this design, the downstream pipe design has historically been widely used in almost all basalt manufacturing facilities worldwide.

This limitation in downstream pipe diameter also limits the number of orifices that can be used in the bushing plate. The downstream pipe cross-sectional area effectively cannot exceed 40% of the total cross-sectional area of all orifices. Therefore, commercial manufacturing processes using the downstream pipe are essentially limited to 836 orifice bushing plates compared to 4800 orifice bushing plates normally used in the conventional fiberglass industry. This system is even further limited by requiring a downstream pipe composed of Pt-Rh alloy which results in at least a 30% increase in bushing cost.

During operation, conventional fiber forming devices (bushings) are electrically heated to compensate for the sharp temperature and viscosity drop from the upper edge of the bushing container to the orifice (nozzle) plate. The standard method of heating the bushings is by connecting the orifice plates across the low voltage windings of a step-down transformer that typically operates at 3-6 volts and several thousand amperes, depending on the size of the bushing. This approach makes heat distribution in the bushing plates solely a function of electrical current patterns. This causes a problem because while the current is constant for the whole bushing assembly, heat is not. This effect is due to variation in the resistance. Heat production is subject to the formula power, P = I²R, Electrical resistance (R) in the thinner sections is higher than in thicker sections, resulting in higher temperature in the thinner sections.

Fiber forming devices are constructed as combinations of metal sheets of differing thicknesses that are welded together along the edges, often running from one terminal to another. Thus some lateral flow of the current is inevitable, affecting temperature distribution in a way that is not easy to predict. In an attempt to maximize uniform heat distribution, conventional fiber forming devices often have a long rectangular shape with electric terminals clamped along a short side of the orifice plate.

These clamps occasionally require adjustments inwardly or outwardly to achieve a more even distribution of temperature over the whole orifice plate. This adjustment involves disconnecting the power, loosening the clamp bolts, sliding the contact to a different position with respect to the bushing terminal, and re-tightening of the clamp bolts. The effect of the adjustment cannot be determined until the bushing has returned to operating temperature. So if the adjustment does not achieve the desired effect, the process must be repeated. Further inefficiency can be caused by inevitable breakage of terminals during the adjustment process.

Additional attempts have been made to overcome the problem of maintaining homogeneity in the melt as it is transferred to and through the bushing. One method includes adding heating elements into the interior of the pipes. The solution, however, still depends on localized conduction heating in the melt and the further increased maintenance and operating costs associated with placing heating elements in the melting furnace.

Other difficulties in producing fibers include those occurring at the filament attenuation process as the filament is drawn from the orifice. Conventional materials used in bushing designs are wetted to some extent by the rock melt. The wettability of the orifice plate strictly depends on the temperature of the melt. The higher the temperature, the lower the contact angle. The wettability of the orifice plate by rock melt is much higher than by conventional glasses because of the high iron oxides content typically present in rock melt. This causes the molten rock (basalt in particular) to run up the outside of a nozzle, spreading and eventually covering the whole underside of the orifice plate. The melt has to be removed by a tedious cleaning operation before fiber drawing can continue. It was found that this problem could be virtually eliminated by providing the nozzles with counter-bores, or by making the nozzle wall as thin as possible. Before fiber is drawn from a nozzle, melt flows through it, forms a drop suspended from the annular ring constituting the exit of the nozzle, and then falls away leaving the fiber attached to the nozzle via a meniscus, provided the viscosity of the melt is within the range suitable for fiber drawing. The time taken for a drop of melt to form and fall away in this fashion is a function of the size of the drop which, in turn, is a function of the area of the annular ring. Therefore, the thinner the wall of the nozzle at the exit, the faster a drop will form and the lower the tendency to wet the outer vertical surface of the nozzle. US Application Publication No. 2006/0218972 addresses this issue by providing a flat orifice plate with just holes with no nozzles installed. Such an arrangement, however, increases the tendency to wet over time.

These issues with the nozzle are again aggravated by the nature of rock melt and cannot be solved by merely transferring glass fiber forming technology to the production of fibers produced from igneous rock. There is a need, therefore, for improvement not only in melting technology but also in the fiber forming aspect of systems and methods for manufacturing rock fibers.

### Summary

The current disclosure addresses at least some of the deficiencies of the prior art by providing fully electric apparatuses for manufacture of continuous fibers from igneous rocks, including, but not limited to rhyolite, dacite, andesite, basalt, diabase, granite, granodiorite, diorite, gabbro, and the like and mixtures thereof. In certain embodiments the disclosed apparatus and methods manufacture high quality, completely homogenous, ductile and continuous fibers of at least 5 microns in diameter from volcanic and plutonic rocks with silica contents of at least 40% - 70%. Such fibers have high mechanical strength and exceptional chemical and temperature resistance. Fibers produced by the disclosed methods and apparatuses can be used in numerous high-tech applications in a variety of industries, including but not limited to the construction industry; the chemical, cryogenic and oil industries; the automotive and marine industries; as well as for space, defense and ballistic applications; fire and heat protection; sound insulation; civil engineering and pipes; and high-pressure tanks and cylinders.

The disclosed apparatuses and methods for manufacturing continuous fibers from igneous rock are capable of melting all suitable igneous rocks by producing an excellent stirring effect through the proper combination of induction power and frequency, and eliminate the need for a special homogenization chamber/zone since homogenization occurs during the melting stage. The apparatus requires no mechanical means for homogenization and achieves homogenous melts lacking cold spots and extreme temperature gradients.

The present disclosure can be described in certain embodiments, therefore, as a method of producing fibers according to claim 1. The method also may include controlling the temperature at the fiber forming orifices to within 20° to 70° or in some examples, 30° C to 60° C, or within 5° C to 10° C or less of a target temperature, which is the optimal temperature for forming fiber from the particular batch material. The appropriate temperature, for example, should be high enough to maintain the rock melt in an homogenous state, and cool enough to allow the material to be drawn out through the fiber forming orifices to form fibers without excessive wetting of the orifice plate.

The disclosed methods can further include passing at least a portion of said homogenous rock melt portion through a conditioning chamber surrounded by an electrical induction coil and cooling the homogenous rock melt portion effective to produce a laminar flow in at least a portion of the conditioning chamber prior to passing the homogenous rock melt portion into the fiber forming chamber. It is understood that the electrical induction coils surrounding the conditioning chamber and the fiber forming chambers can be connected to the same or different electrical generators or circuits or that the power and frequency of the circuits can be individually controlled.

In certain embodiments the volume of crushed igneous rock can be pre-heated prior to being added to the furnace chamber and the pre-heating step can be accomplished at least in part by transferring hot exhaust gasses from the furnace chamber to a batch charger containing a batch of crushed igneous rock. During operation, a volume of crushed igneous rock is pre-heated and then released into the furnace chamber down a chute or ramp, where the batch is then heated to a temperature of from about 1200° C to about 3000° C. In certain embodiments the temperature is determined by a pre-test of the igneous rock to determine the optimal melt temperature, which will vary depending on the composition of each particular starting material.

The furnace chamber can be divided into a first zone and a second zone separated from the first zone by an underflow baffle and wherein said second zone is in fluid communication with a conditioning chamber through an opening in the wall of said furnace chamber. The conditioning chamber can include one or more openings in the bottom surface thereof providing fluid communication between the conditioning chamber and one or more fiber forming chambers. The fiber forming chambers can be wrapped in a temperature water jacket effective to cool the walls of the fiber forming chambers effective to form a layer of skull on the inside surface of the fiber forming chambers. In certain embodiments, the crushed igneous rock can include basalt and can also include at least one of feldspars, quartz, feldspathoids, olivines, pyroxenes, amphiboles, and micas. The igneous rock can also include any of rhyolite, dacite, andesite, basalt, diabase, granite, granodiorite, diorite, or gabbro. In certain embodiments the igneous rock is primarily basalt with mixtures of certain other minerals to affect selected properties of the produced fibers, such as improvement of mechanical or chemical properties, for example, or improved shielding or radiation resistance. In certain embodiments, the crushed rock samples can include minerals that can contain chemical elements, including but not limited to: zirconium, boron, cadmium, hafnium, gadolinium or europium.

In still further preferred embodiments the methods can include placing temperature sensors at least in the conditioning chamber and the fiber forming chambers and controlling the temperature in the conditioning chamber and fiber forming chambers through computerized control of the electrical current in the induction coils based on feedback received by a computer from the temperature sensors.

The disclosure can be described, therefore, in certain embodiments as a method of producing fibers according to claim 7.

The methods can further include continuous processing including repeating the steps of
obtaining a quantity of crushed igneous rock to be converted to fiber;
placing a batch of said quantity of crushed igneous rock in a batch charger;
preheating said batch; and
transporting said batch to a first chamber of a melting furnace, wherein the melting furnace is wrapped with an electrical induction coil. Additional repeatable steps may include further removing heated gasses from said second zone of said melting furnace and flowing said gasses into said batch charger, and controlling the temperature in said furnace and chambers with a computer; wherein the computer receives temperature data from temperature sensors placed in said conditioning chamber and in each of said fiber forming chambers and controls power level and AC frequency based on data received from said temperature sensors.

The disclosed methods of preparing igneous rock for use in production of fibers can also include placing raw, crushed igneous rock in a melting furnace, wherein the melting furnace is wrapped with an electrical induction coil electrically connected to a generator; and applying high frequency AC electrical current to said induction coil from said generator with sufficient power to raise the temperature above the glass melting point of all mineral constituents of said igneous rock.

In certain embodiments, the disclosure can also be described as an apparatus for producing fibers according to claim 12.

The disclosed apparatus can further include one or more of a plurality of temperature sensors disposed in the melting furnace, the conditioning chamber and in each fiber forming chamber, a plurality of water sprayers configured to spray mist on filaments as they emerge from said orifices, one or more gathering shoes each configured to consolidate fibers from one of said fiber forming chambers, one or more winders configured to receive filament from one or more of said shoes, and one or more computers configured to receive temperature and water flow data from said apparatus and to control said power generators, frequency converters and water supplies, and to control introducing additional batches into the heating furnace as needed. The batch charger can, therefore include a motor configured to provide vibration to said hopper configured to facilitate emptying of the hopper.

In certain embodiments, the apparatus can further include one or more of cooling jackets comprising copper or stainless steel tubes, each in fluid communication with a water supply and heat exchange unit, a first generator which can be, but is not limited to, a 500 kW generator, one or more second generators, wherein the second generators can be, but are not limited to, 250 kW generators, and heat exchange units that comprise an air cooler or a cooling tower. Each fiber forming surface can comprise a metal, ceramic or combination of metal and ceramic plate, wherein the metal plates can comprise platinum or a platinum alloy, and wherein each of said fiber forming surfaces comprises from about 200 to 2000 orifices. In certain embodiments the fiber forming chambers can be cylindrical in shape and wherein the fiber forming surface is round and forms substantially the entire bottom surface of the fiber forming chamber.

It is understood that the generators described herein are representative only, and that the power and frequency used for any particular batch of material will depend on the capacity of the apparatus, the material being processed and on the required temperature. For example, an apparatus with a capacity of 150 kg of melt per hour can utilize, for example, a first (main) generator providing a power of 500 kW at a frequency of 3 MHz to achieve a melt temperature of 2600° C, a secondary generator providing a power of 200 kW at a frequency of 10 kHz to achieve a temperature of 1500° C, and one fiber forming surface including up to 2400 orifices. It is further understood that for an industrial scale apparatus with a capacity of 1200 kg of melt per hour, can utilize for example, a main generator providing a power of 4 MW at a frequency of up to 30 MHz to achieve a melt temperature of 3000° C and one or more secondary generators, each providing a power of 300 kW at frequency of up to 100 kHz to achieve a melt temperature of 1500° C and utilizing multiple fiber forming devices totaling from about 1000 to about 6000 orifices. It is understood that smaller, or much larger furnaces may be employed and that the power and frequency provided to the coils are tailored to particular raw feedstock and continuous output capacity. Generators for use in the current disclosed apparatus and methods can, therefore include those capable of power output from about 1 kW to 10 MW or greater as needed and at compatible frequencies from about 60 Hz to 100 kHz, or from about 1kHz to 100 MHz, for example.

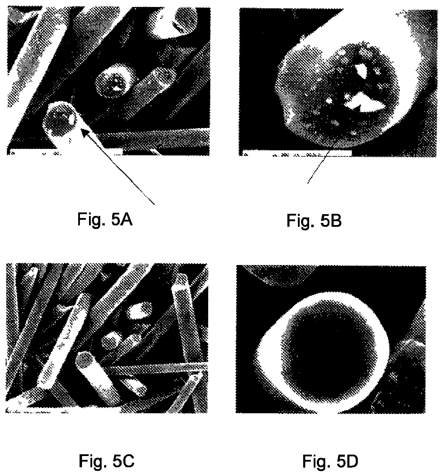

The disclosure can also be described in certain embodiments as a fiber made by the disclosed processes. Such fibers can include fibers with a diameter of from 1 micron (µm) to 100 µm, or more, depending on the raw material, the intended use, and the structure of the fiber forming surfaces. The fibers can include diameters of 1 µm, 2 µm, 3 µm, 4 µm, 5 µm, 6 µm, 7 µm, 8 µm, 9 µm, 10 µm, 12 µm, 15 µm, 17 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, or 100 µm for example, or any other specific size within that range. The disclosed fibers can be free, or substantially free, of non-fused crystalline particles when viewed microscopically. By substantially free, it is meant at least 80% or at least 90% or more than 99% of the fibers by volume or cross-sectional area contain no visible crystalline particles. A view of crystalline particle free fibers is shown microscopically in Fig. 5C and 5D. As can be seen in the figures, the fibers (5C and 5D) made by the disclosed process are free of visible crystalline particles, whereas the fibers in 5A and 5B, made by conventional fiber forming processes, contain easily visible, high levels of crystalline particles as indicated by the arrows.

### Brief Description of the Drawings

The following drawings form part of the present specification and are included to further demonstrate certain aspects of the present inventions. The disclosure can be better understood by reference to one or more of these drawings in combination with the detailed description of specific embodiments presented herein.
Fig. 1 is a schematic drawing of a typical furnace system as known in the art for producing fibers from igneous rock.
Fig. 2 is a schematic drawing of a preferred embodiment of a fiber production apparatus.

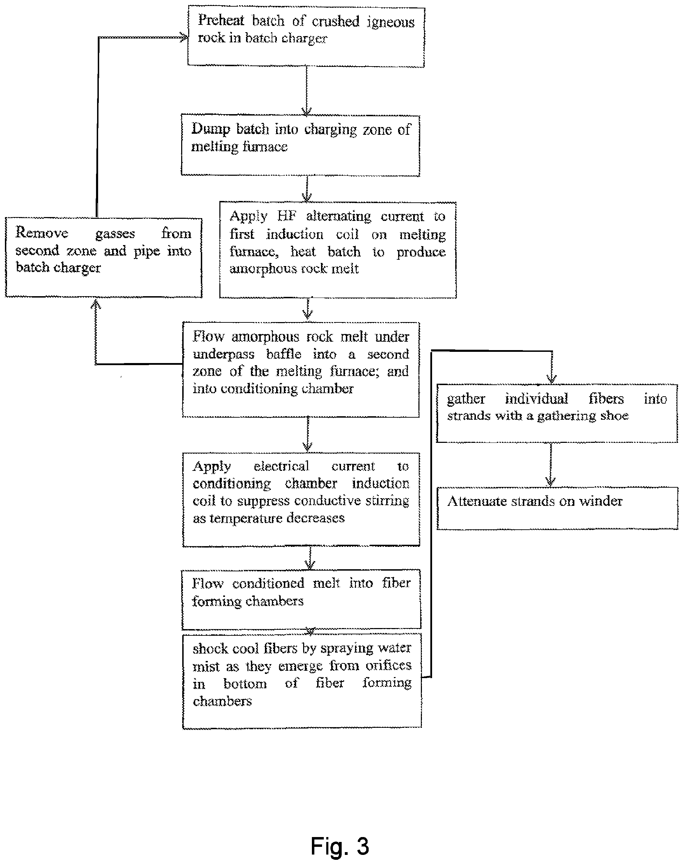

Fig. 3 is a flow diagram of a preferred process.
Fig. 4A is a side cross-sectional view of an embodiment of a fiber forming device.
Fig. 4B is an isometric view from the bottom of the fiber forming device of Fig. 4A.
Figs. 5A-5D are microscopic views of fibers made by conventional melt methods (5A and 5B) and fibers made by the disclosed method and apparatus (5C and 5D).

### Detailed Description

The disclosed apparatus and methods address at least some of the problems of producing fibers with conventional furnace technology at least because they do not utilize refractories for kiln heat insulation and they have the ability to heat the rock melt homogenously up to 3000° C without a mechanical apparatus for stirring. This can achieve a 100% homogenous state of the rock melt even in the presence of such infusible minerals as quartz/quartzite, forsterite; corundum; zirconium, etc. Furthermore, the formation of a layer of skull on the furnace wall protects the furnace from the effects of high temperature and aggressive melt, reducing wear of the walls and greatly extending furnace life. A furnace of the present disclosure is believed to likely have a useful lifetime of 20 to 30 years, for example, as compared to a lifetime of 2-5 years for a furnace used in conventional rock melting technologies.

There are three basic stages of melting igneous rock in a furnace, startup (including initial lighting and/or heating to target temperature), routine operation, and shutdown, typically for repair or maintenance. Due to the technical limitations of conventional tank furnace design and refractory materials, the startup process of lighting and heating usually requires a gradual ramp up in temperature with adjustments to the structure as the temperature increases, a process that takes an average of up to 20 days. The time for shutdown for a conventional furnace is approximately equal to the startup, to avoid cracks and destruction of refractories during cooling. During the normal operational mode for conventional furnace tanks, inefficiencies are often experienced due to the inertia of the melt, especially dark melt, as with igneous rock. Conventional heating devices such as gas or heating electrodes act locally causing temperature discontinuities to exist throughout the volume. In certain cases it can take hours to achieve an homogenous temperature.

By contrast, the disclosed apparatus and methods can achieve a uniform thermal effect on the entire volume of the melt through circular electric currents, known as eddy currents, induced within the melt by a changing magnetic field. Eddy currents, also called Foucault currents, are loops of electric current induced within conductors by a changing magnetic field in the conductor, due to Faraday's law of induction. Eddy currents flow in closed loops within conductors, in planes perpendicular to the magnetic field. This process distributes heat evenly throughout the entire volume of the melt, which serves as the conductor in this case. The procedures for startup and shutdown for an apparatus of the present disclosure can take just an hour and adjusting the melt temperature of the entire body of melt can take minutes. The process is thus very flexible, and can be stopped and started at any time as needed without long delays.

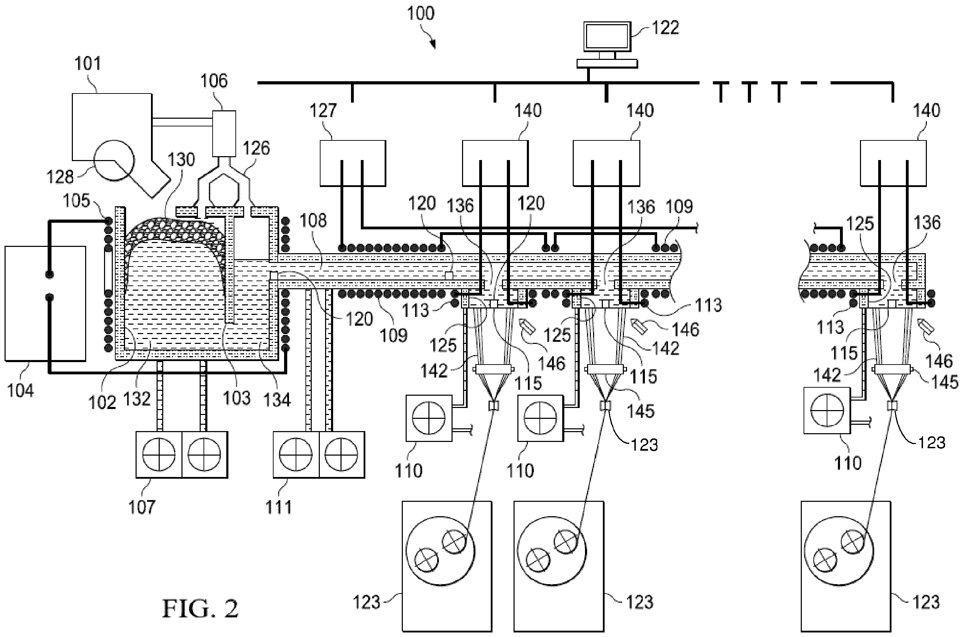

An example of a preferred embodiment of an apparatus for manufacturing continuous fibers is shown in Fig. 2. The apparatus **100** includes a batch charger **101** which includes a hopper for receiving crushed basalt or raw igneous rock. The hopper can be designed to hold approximately 25 cubic feet (0.71 cubic metres) in some embodiments, and up to 1200 cubic feet (34 cubic metres) or more in an industry setting, and can include one or more small motors **128** of from 2 to 5 horsepower (1 kilowatt to 4 kilowatts) for example, or even 2.5 horsepower (2 kilowatts) to vibrate the charge from the hopper to a tray for dumping the raw rock **130** into the melting chamber **102.** The melting chamber **102** is divided into two zones, the charging zone **132** and the prepared melt zone **134.** The two zones are separated by an underflow baffle **103** to maintain the melting ore in the charging zone until complete homogeneity is achieved. While described herein as a single melt and charging zone in a furnace chamber, it is understood that multiple chambered furnaces can be employed in the processes described herein, in which one or more melt zones are separated from one or more charging
zones by one or more baffles, or that variations of baffles other than underflow baffles can be employed.

A generator and power supply **104** provide electrical current to an induction coil **105** that wraps the melting chamber **102.** In certain embodiments a 500 kW power supply with a high frequency (HF) converter can be used. It is understood of course, that choice of power supply and converter frequency will depend on the particular application and furnace design, and that the described power is an example of a preferred embodiment. Additionally, the power supply and converter can be contained in a single device as shown, or can be in separate locations as required by individual furnace design. For example, a single electrical coil can serve multiple furnaces, or a single furnace or chamber can employ multiple induction coils.

A pump **106** draws gasses from the melting chamber through piping **126** and supplies the heated gas to the batch charger **101** for preheating. A water supply and heat exchanger unit **107** are also connected to the melting chamber **102** for cooling. A heating exchanger can be of any type known in the art and can be selected from dry air coolers and cooling towers, for example, or other types depending on the environment in which the furnace is operated.

The melted rock is drawn from the prepared melt zone **134** into a conditioning chamber **108** connected to melting chamber **102** in such a way that the melt flows from the charging zone **132** under the underflow baffle **103** and rises to the opening into the conditioning chamber. The conditioning chamber is preferably configured as a horizontal channel that cools the melt from the furnace temperature to the fiber forming temperature, and directs the melt to the fiber forming chambers. The melt can be cooled, for example from temperatures in the range of 3000° C or 2000° C or 1800° C or 1400° C to a temperature that reduces turbulence and produces laminar flow in the conditioning chamber **108.** Flow can be controlled in response to temperature readings provided by temperature sensor devices **120** disposed at various points of the flow path including at the opening into the conditioning chamber **108** as shown. It is understood that sensors can be placed throughout the system as needed and that the placement of sensors in the embodiment shown in Fig. 2 is only an example and is not limiting.

The temperature in the conditioning chamber **108** is controlled in a preferred embodiment by a separate induction coil **109,** powered by a separate generator and power supply **127,** and cooled by a separate water supply and heat exchanger unit **111.** The power supply **127** for the conditioning chamber **108** can be smaller, such as 250 kW for use in a particular embodiment, for example, and the water supply and heat exchanger can be separate but of the same types as the heat exchanger for the melting chamber. It is understood, however, that the conditioning chamber can have a lower cooling capacity requirement.

A plurality of fiber-forming chambers **125** extend from the bottom along the channel of the conditioning chamber **108** and include an upper opening **136** for flow of melt into each fiber-forming chamber **125.** The number of fiber-forming chambers is determined by the capacity of the melting chamber and can be 2, 3, 4, 5, 10, 20 or more. The fiber-forming chambers can be considered as small furnaces with tightly controlled temperatures. Each fiber-forming chamber **125,** in this particular embodiment, includes an induction coil **113** and in certain embodiments, individually controlled power supply and generator **140,** and water supply and heat exchanger system **110.** The bottom of each chamber **125** is formed at least in part by a fiber-forming device **115** which can be a metal plate such as a platinum or platinum alloy plate attached to the bottom of each fiber-forming chamber **125** and including a pattern of openings or orifices, optionally tipped by nozzles. As the cooling melt is drawn through the orifices to form fibers **142,** cooling water sprayers **146** shock cool the fibers with mist to prevent recrystallization. The fibers are then gathered into filaments on a shoe device **145** and attenuated on winders **123.** The process can be controlled and managed with a computerized process management system 122.

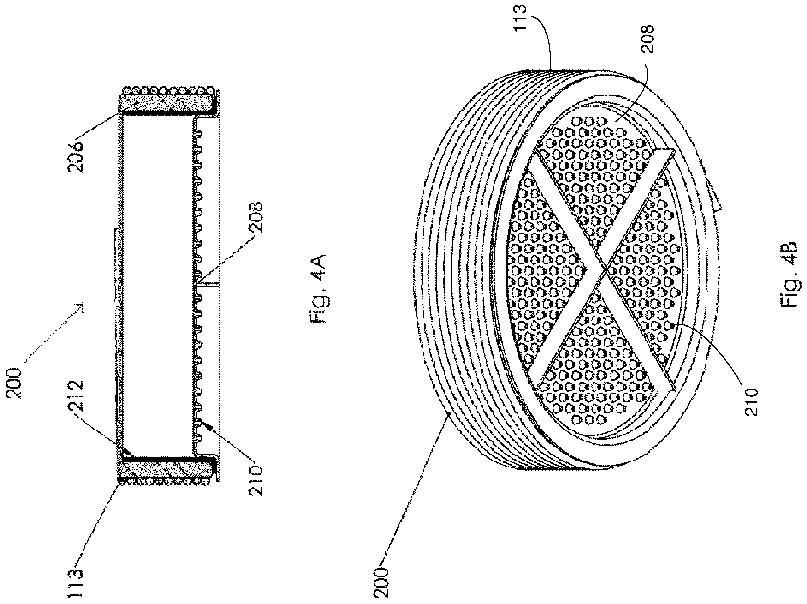

An embodiment of a fiber forming device **200** is shown in Fig. 4A and 4B. As best seen in Fig. 4B, the fiber forming device **200** is round and the fiber forming chamber **125,** which receives the molten rock is wrapped in a water jacket **206,** which is wrapped with an induction coil **113.** The entire bottom of the chamber forms the orifice (nozzle) plate **208** in which the nozzles **210** are formed. This configuration operates to minimize distortion under operating temperature and under the head of molten rock above the orifice (nozzle) plate; and to maintain the very large orifice (nozzle) plate at uniform temperature.

Hot melt contact with the water-cooled walls of the fiber forming device is solidified to form a thin layer of skull **212,** which not only protects the walls from corrosion but offsets the exponential heat distribution from the walls to the center axis of the device. Skull is understood in the art to be a layer of iron or slag solidified on the inner surface of the furnace lining. In embodiments of the disclosure, a round shaped container body, an induction coil and regulation of water temperature and water flow rate in the walls of device make it possible to achieve a uniform heat distribution all over the melt body. With some additional arrangements such as installation of water cooled ribs, the disclosed device allows orifice (nozzle) plates of very large sizes (6000 tips and up) without adversely affecting the fiber attenuation process. This process is thus highly compatible in terms of capacity and production cost with existing conventional fiberglass production processes. It is also up to 50% more energy efficient than conventional orifice (nozzle) plate heating methods.

In the practice of the methods of the disclosure, raw material such as crushed igneous rocks with or without supplemental materials can be preheated in the batch charger **101** and transferred to the primary melt melting chamber **102.** In the melting chamber **102** the raw material contacts hot melt within the chamber and is combined with the hot melt as a result of circular electric currents induced by the coil **105.** The conductivity and thermal effect on the raw material increases until a complete change of state, from solid to liquid is complete. It is an aspect of the disclosure that the melt process can be enhanced by the addition of graphite, either a graphite ring or powder, to the initial batch. After the initial melt, no further enhancement is necessary. The first melt product that may or may not include an enhancer is typically discarded.

During operation, the frequency F1 and power P1 of a generator **104** are set to provide a stable and intense stirring effect throughout the melt volume, to melt all minerals in the initial raw material and to achieve a 100% homogenous material. By regulating F1 and P1, the melt temperature can be adjusted within a range of from about 1300° C to about 3000° C, for example.

The melting chamber **102** and underflow baffle **103** can be composed of copper or stainless steel tubes, which can be continuously supplied with cooling water. The walls of the melting chamber **102** and underflow baffle **103** can be protected by skull which is formed between the wall and the melt and water flow can cool the melt at the heat exchanger unit **107.**

Gases that are released during the melting process can be pumped out of the melting chamber **102** by pump **106** through special openings in the top of melting chamber **102** and routed to the batch charger **101** for preheating the raw material.

The homogeneous melt then can enter the conditioning chamber **108** located above the bottom level of the melting chamber **102.** The conditioning chamber **108** can be connected to the melting chamber **102** on the opposite side from the raw material charger and the melting chamber **102** can include two zones separated by an underflow baffle **103.** This baffle can prevent non-molten materials from the charging zone side of the melting chamber from entering the conditioning chamber prior to being fully melted.

The conditioning chamber **108** can be heated by currents induced by coil **109.** Frequency F2 and power P2 generated by generator **109** can be set at levels that suppress the stirring effect inside the conditioning chamber **108** and lower the temperature of the melt to reduce turbulence and produce laminar flow in the conditioning chamber.

The conditioned and stabilized melt can then flow to the fiber-forming chambers **125.** Each fiber-forming chamber **125** can be made of copper or stainless steel tubes or any appropriate material known in the art, which can be continuously supplied with cooling water provided by a separate water supply and heat exchanger units **110.** The cooling of the walls of the fiber-forming chamber **125** by the water creates a layer of skull between the wall and the melt protecting the refractory from degradation by the melt. The temperature and viscosity of the melt inside each fiber-forming chamber **125** can be controlled by generators **140** and induction coils **113.** Frequency F3 and power P3 can be set at levels that maintain temperature and viscosity within the narrow range as required for filament formation.

Fiber-forming devices **115** can be attached to the bottom of each fiber-forming chamber **125.** Each fiber-forming device can be a specially shaped plate made of heat-resistant materials with numbers of orifices that let rock fiber filaments form as they pass through and out of the orifices. Filaments that are coming out of fiber-forming devices can be exposed to shock cooling by means of fiber filament cooling devices **146.** The fiber filament cooling devices **146** can be designed as a set of nozzles, which create a pressurized coldwater mist located just under the fiber-forming device; this arrangement can be necessary to avoid reverse crystallization during the fiber forming process. The process produces 100% homogenous filaments without any crystallinity or surface defects. Crystals and surface defects would significantly reduce the mechanical strength of the fibers. Microphotos of fibers formed by conventional technology and by the disclosed systems and methods are shown in Fig. 5. As can be seen in Figs. 5A-5D fibers formed by the disclosed method are substantially free of crystalline particles caused by incomplete melting.

The formed filaments then pass through sizing agent applicators (not shown), and can be assembled in strand by gathering shoes **145** and wound on cakes by winders **123.** The formed fibers can be preferably of about 8 to about 15 µm in diameter. The entire process can be controlled and managed by a computer process management system 122 that manages frequencies, powers, water flows and charger according to input data received from temperature sensors **120** and winders **123.**

It is a further aspect of the disclosure that rock fibers produced by the apparatus and methods disclosed herein are contemplated to be of higher quality, e.g. free or substantially free of weaknesses caused by incomplete melt and produced at lower cost than conventionally produced fibers. The disclosed fibers are thus useful in numerous applications in a variety of industries, including but not limited to the computers and electronic industry, the construction industry; the chemical, cryogenic and oil industries; the automotive and marine industries; as well as for space, defense and ballistic applications; fire and heat protection; sound insulation; civil engineering and pipes; and high-pressure tanks and cylinders. Contemplated as an aspect of this disclosure are the many products that are likely to contain such fibers, including but not limited to, construction beams, concrete, insulation, pipes and tools, computers and electronic devices including antennas, sporting goods, protective equipment for police, defense and recreation as well as structural components of automobiles, boats, airplanes and other types of vehicles. The uses of the disclosed fibers mentioned above and all others apparent to those of skill in the art are contemplated to be within the scope of the present disclosure.

All of the apparatus and methods disclosed and claimed herein can be made and/or executed without undue experimentation in light of the present disclosure.

## Claims

1. A method of producing fibers from raw basalt or igneous rock, the method comprising:
adding a volume of crushed raw basalt or igneous rock (130) to a first zone (132) of the melting furnace chamber (102), wherein the first zone (132) of the melting furnace chamber (102) is at least partially surrounded in a first electrical induction coil (105);
applying a first alternating current to the first induction coil (105) to heat the first induction coil effective to heat the volume of crushed raw basalt or igneous rock (130) added to the first zone (132) and to produce a homogenous rock melt in at least a portion of the volume of the raw basalt or igneous rock (130);
passing at least a part of the homogenous rock melt portion through at least one fiber-forming chamber (125);
passing at least a portion of the rock melt from the at least one fiber-forming chamber (125) through fiber-forming orifices under controlled temperature effective to produce fibers (142), wherein the fiber-forming chamber (125) is at least partially surrounded by a third electrical induction coil (113) and the temperature of the homogenous rock melt portion in the fiber-forming chamber (125) is controlled at least in part by the power and frequency of electrical current in the third induction coil (113).

2. The method of claim 1, wherein the controlled temperature at the fiber-forming orifices is controlled to within 20°C to 70°C of a target temperature, such as to within 30°C to 60°C of a target temperature; and/or wherein the volume of crushed raw basalt or igneous rock (130) is heated to a temperature of from about 1300°C to about 3000°C in the furnace chamber (102).

3. The method of claim 1, further comprising passing at least a portion of the homogenous rock melt portion through a conditioning chamber (108) at least partially surrounded by a second electrical induction coil (109) and cooling the homogenous rock melt portion effective to produce a laminar flow in at least a portion of the conditioning chamber (108) prior to passing the homogenous rock melt portion into the fiber-forming chamber (125), optionally wherein the furnace chamber (102) is divided into a first zone (132) and a second zone (134) and wherein the second zone (134) is in fluid communication with the conditioning chamber (108) through an opening in the wall of the furnace chamber (102), wherein the first zone (132) and the second zone (134) are optionally separated by an underflow baffle (103).

4. The method of claim 1, wherein the volume of crushed raw basalt or igneous rock (130) is pre-heated prior to being added to the furnace chamber (102); such as wherein the volume of crushed raw basalt or igneous rock is heated by exhaust gasses from the furnace chamber (102) prior to being added to the furnace chamber (102), optionally wherein the volume of crushed raw basalt or igneous rock is held in a batch charger (101) prior to being added to the furnace chamber (102), and wherein the exhaust gasses from the furnace chamber (102) are pumped into the batch charger (101).

5. The method of claim 1, wherein the crushed raw basalt or igneous rock (130) comprises at least one of feldspars, quartz, feldspathoids, olivines, pyroxenes, amphiboles, and micas; or wherein the crushed raw basalt or igneous rock comprises rhyolite, dacite, andesite, basalt, diabase, granite, granodiorite, diorite, or gabbro.

6. The method of claim 3, further comprising placing temperature sensors (120) at least in the conditioning chamber (108) and the fiber-forming chamber (125) and controlling the temperature in the conditioning chamber (108) and fiber-forming chamber (125) through computerized control of the electrical current in the second and third induction coils (109, 113) based on feedback received by the computer from the temperature sensors (120).

7. A method of producing fibers, comprising the steps of:
obtaining a quantity of crushed raw basalt or igneous rock (130) to be converted to fiber (142);
transporting the batch to a melting furnace, wherein the melting furnace is at least partially surrounded by a first electrical induction coil (105);
applying alternating current to the first induction coil (105), effective to heat the batch to a temperature greater than the melting point of all minerals in the batch to produce an homogenous rock melt in at least a portion of the batch;
flowing the homogenous rock melt into a conditioning chamber (108) through an opening in an upper portion of a wall of the melting furnace, wherein the conditioning furnace (108) is at least partially surrounded by a second induction coil (109);
applying electrical current to the second induction coil (109) effective to suppress conductive stirring of rock melt and to allow temperature to decrease to produce conditioned rock melt;
flowing the conditioned rock melt into a plurality of fiber-forming chambers (125), wherein each fiber-forming chamber (125) is at least partially surrounded by a third inductive coil (113);
applying electrical current to the third inductive coils (113), effective to reach and maintain conditioned melt at fiber-forming temperature;
flowing conditioned melt from fiber-forming chambers (125) through a plurality of orifices in a bottom surface of a fiber-forming chamber (125) to produce fibers (142) extruded from at least a portion of the orifices, thereby forming fibers (142).

8. The method of claim 7, wherein the crushed raw basalt or igneous rock is preheated in a batch charger (101) prior to being transported to the melting furnace; and/or wherein the melting furnace is divided into a first zone (132) and a second zone (134) and wherein the homogenous rock melt enters the conditioning chamber (108) through an opening in the wall of the second zone (134) of the melting furnace, wherein the first zone (132) is optionally separated from the second zone (134) by an underflow baffle (103); and/or wherein the method further comprises shock cooling the fibers (142) by spraying a water mist on the fibers (142) as they emerge from the orifices; and/or wherein the method further comprises gathering individual fibers (142) into a plurality of strands with a gathering shoe (145), and optionally winding one or more of the strands on a winder (123).

9. The method of claim 7, further comprising producing fibers (142) in a continuous process by obtaining a second and subsequent quantities of crushed raw basalt or igneous rock (130) to be converted to fiber and transporting the crushed raw basalt or igneous rock (130) to the melting furnace to maintain the flow of homogenous rock melt from the melting furnace to the fiber-forming chambers (125), wherein heated gasses are optionally removed from the melting furnace and flowed into the batch charger (101) effective to preheat the crushed raw basalt or igneous rock (130) in the batch charger (101).

10. The method of claim 7 further comprising controlling the temperature in the melting furnace conditioning chamber (108) and fiber-forming chambers (125) with a computer; wherein the computer receives temperature data from temperature sensors (120) placed in one or more of the melting furnace, the conditioning chamber (108) and the fiber-forming chambers (125) and controls power level and AC frequency based on data received from the temperature sensors (120).

11. The method of claim 1 or claim 7, wherein the fiber-forming chambers (125) are cylindrical in shape.

12. An apparatus (100) for producing fibers (142) comprising:
a melting furnace configured with an opening to receive batches of raw basalt or igneous rock (130), wherein the melting furnace comprises a melting chamber (102) divided into a first zone (132) for receiving charged batches and a second zone (134) for prepared melt, wherein the first zone (132) and the second zone (134) are divided by an underflow baffle (109), wherein a wall of the second zone forms an exit opening, and wherein the exit opening is located nearer to a top of the melting chamber than to a passageway under the underflow baffle (103);
a first induction coil (105) located at least partially around the melting furnace;
a first generator (104) and a first high frequency converter electrically connected to the first induction coil (105);
a first cooling jacket located in the walls of the melting furnace, wherein the first cooling jacket is in fluid communication with a first water supply and heat exchanger unit (107);
a conditioning chamber (108) comprising a horizontal channel with a first end and a second end, wherein the conditioning chamber (108) is in fluid communication with the second zone (134) through the exit opening, and wherein a bottom wall of the conditioning chamber (108) forms a plurality of openings in spaced relation along a length of the conditioning chamber (108) toward the second end of the horizontal channel;
a second induction coil (109) located at least partially around the conditioning chamber (108);
a second generator (127) and a second high frequency converter electrically connected to the second induction coil (108);
a second cooling jacket located in the walls of the conditioning chamber (108), wherein the second cooling jacket is in fluid communication with a second water supply and heat exchanger unit (111);
a plurality of fiber-forming chambers (125) located below the conditioning chamber (108) and respectively in fluid communication with the conditioning chamber (108) through the respective plurality of openings in the bottom wall of the conditioning chamber (108), wherein each fiber-forming chamber (125) in the plurality of fibre-forming chambers (125) comprises a fiber-forming surface located in the bottom of each fiber-forming chamber (125), wherein the fiber-forming surface comprises a plurality of orifices sized and configured to each respectively form a fiber from rock melt as the rock melt passes through the respective orifices;
a third induction coil (113) located at least partially around the plurality of fiber-forming chambers (125);
a third generator (140) and a third high frequency converter electrically connected to the third induction coil (113); and
a third cooling jacket located in the walls of the plurality of fiber-forming chambers (125), wherein the third cooling jacket is in fluid communication with a third water supply and heat exchanger unit (110).

13. The apparatus of claim 12, further comprising a batch charger (101) comprising a hopper for receiving crushed basalt or igneous rock (130) and for flowing the crushed basalt or igneous rock (130) into the first zone (132) of the melting furnace, and optionally further comprising an air channel (126) connecting the second zone (134) to the batch charger (101) and a pump (106) configured to draw gasses from the melting chamber (102) and to deliver the gasses to the batch charger (101); and/or further comprising a plurality of temperature sensors (120) located in the melting furnace, the conditioning chamber (108) and in one or more fiber-forming chambers (125); and/or further comprising a plurality of water sprayers (146) configured to spray mist on filaments as they emerge from the orifices; and/or further comprising one or more gathering shoes (145) each configured to consolidate fibers from one of the fiber-forming chambers (125), and optionally one or more winders (123) configured to receive filament from one or more of the shoes (145); and/or further comprising a computer configured to receive temperature and water flow data from the apparatus (100) and to control the first generator (104), the second generator (127), and the third generator (140), the first high frequency converter, the second high frequency converter, and the third high frequency converter; and the first water supply (107), the second water supply (111), and the third water supply (110); wherein the batch charger (101) optionally comprises a motor (128) configured to provide vibration to the hopper configured to facilitate emptying of the hopper.

14. The apparatus of claim 12, wherein one or more of the first cooling jacket, the second cooling jacket, and the third cooling jacket comprises copper or stainless steel tubes in fluid communication with one or more water supply and heat exchange units (107, 110, 111); and/or wherein at least one of the first generator (104), the second generator (127), and the third generator (140) provides from 500 kW to 10 MW of power and wherein at least one of the first high frequency converter, the second high frequency converter, and the third high frequency converter enables the electrical power to be provided at a frequency of 100kHz to 30MHz; and/or wherein at least one of the first generator (104), the second generator (127), and the third generator (140) provides from 50 kW to 500 kW of power, and wherein at least one of the first high frequency converter, the second high frequency converter, and the third high frequency converter enables the electrical power to be provided at a frequency of 60Hz to 100kHz; and/or wherein each of the heat exchange units comprises an air cooler or a cooling tower; and/or wherein each fiber-forming surface comprises a metal plate, wherein the metal plate optionally comprises platinum or a platinum alloy; and/or wherein each of the fiber-forming surfaces comprises from 100 to 4000 orifices; and/or wherein the fiber-forming chambers (125) are cylindrical in shape and wherein the fiber-forming surface is round and forms substantially the entire bottom surface of the fiber-forming chamber (125).

## Patentansprüche

1. Verfahren zur Herstellung von Fasern aus rohem Basalt oder vulkanischem Gestein, wobei das Verfahren Folgendes umfasst:
das Hinzufügen eines Volumens von zerkleinertem, rohem Basalt oder vulkanischem Gestein (130) zu einer ersten Zone (132) der Schmelzofenkammer (102), wobei die erste Zone (132) der Schmelzofenkammer (102) zumindest teilweise von einer ersten elektrischen Induktionsspule (105) umgeben ist;
das Anlegen eines ersten Wechselstroms an die erste Induktionsspule (105), um die erste Induktionsspule zu erwärmen, damit das Volumen des zerkleinerten, rohen Basalts oder des vulkanischen Gesteins (130), das der ersten Zone (132) zugeführt wird, erwärmt wird, und um eine homogene Gesteinsschmelze in mindestens einem Teil des Volumens des rohen Basalts oder des vulkanischen Gesteins (130) zu erzeugen;
das Durchleiten von mindestens einem Teil der homogenen Gesteinsschmelze durch mindestens eine Faserbildungskammer (125);
das Durchleiten von mindestens einem Teil der Gesteinsschmelze aus der mindestens einen Faserbildungskammer (125) durch faserbildende Öffnungen unter kontrollierter Temperatur, die zur Herstellung von Fasern (142) wirksam ist, wobei die Faserbildungskammer (125) mindestens teilweise von einer dritten elektrischen Induktionsspule (113) umgeben ist und die Temperatur des homogenen Gesteinsschmelzanteils in der Faserbildungskammer (125) mindestens teilweise durch die Leistung und Frequenz des elektrischen Stroms in der dritten Induktionsspule (113) gesteuert wird.

2. Verfahren nach Anspruch 1, wobei die geregelte Temperatur an den faserbildenden Öffnungen auf eine Zieltemperatur von 20°C bis 70°C, wie zum Beispiel auf eine Zieltemperatur von 30°C bis 60°C, geregelt wird; und/oder wobei das Volumen des zerkleinerten, rohen Basalts oder des vulkanischen Gesteins (130) in der Ofenkammer (102) auf eine Temperatur von etwa 1300°C bis etwa 3000°C erhitzt wird.

3. Verfahren nach Anspruch 1, ferner umfassend das Durchleiten von mindestens einem Teil der homogenen Gesteinsschmelze durch eine Konditionierungskammer (108), die mindestens teilweise von einer zweiten elektrischen Induktionsspule (109) umgeben ist, und das Kühlen des Teils der homogenen Gesteinsschmelze, wodurch bewirkt wird, dass in mindestens einem Teil der Konditionierungskammer (108) eine laminare Strömung erzeugt wird, bevor der Teil der homogenen Gesteinsschmelze in die Faserbildungskammer (125) geleitet wird, optional, wobei die Ofenkammer (102) in eine erste Zone (132) und eine zweite Zone (134) unterteilt ist und wobei die zweite Zone (134) durch eine Öffnung in der Wand der Ofenkammer (102) in Fluidverbindung mit der Konditionierungskammer (108) steht, wobei die erste Zone (132) und die zweite Zone (134) optional durch eine Unterlauf-Leitwandung (103) getrennt sind.

4. Verfahren nach Anspruch 1, wobei das Volumen an zerkleinertem, rohem Basalt oder vulkanischem Gestein (130) vor der Zugabe in die Ofenkammer (102) vorgewärmt wird; wobei beispielsweise das Volumen an zerkleinertem, rohem Basalt oder vulkanischem Gestein durch Abgase aus der Ofenkammer (102) erwärmt wird, bevor es der Ofenkammer (102) zugeführt wird, optional, wobei das Volumen an zerkleinertem, rohen Basalt oder vulkanischem Gestein in einem Chargenlader (101) gehalten wird, bevor es der Ofenkammer (102) zugeführt wird, und wobei die Abgase aus der Ofenkammer (102) in den Chargenlader (101) gepumpt werden.

5. Verfahren nach Anspruch 1, wobei der zerkleinerte, rohe Basalt oder das vulkanische Gestein (130) mindestens eines der folgenden Stoffe umfasst: Feldspat, Quarz, Feldspathoide, Olivine, Pyroxene, Amphibole und Glimmer; oder wobei der zerkleinerte, rohe Basalt oder das vulkanische Gestein Rhyolith, Dazit, Andesit, Basalt, Diabas, Granit, Granodiorit, Diorit oder Gabbro umfasst.

6. Verfahren nach Anspruch 3, ferner umfassend das Anbringen von Temperatursensoren (120) zumindest in der Konditionierungskammer (108) und der Faserbildungskammer (125) und das Steuern der Temperatur in der Konditionierungskammer (108) und der Faserbildungskammer (125) durch computergestützte Steuerung des elektrischen Stroms in der zweiten und dritten Induktionsspule (109, 113) auf der Grundlage einer Rückmeldung, die der Computer von den Temperatursensoren (120) erhält.

7. Verfahren zur Herstellung von Fasern, das die folgenden Schritte umfasst:
die Beschaffung einer Menge von zerkleinertem, rohem Basalt oder vulkanischem Gestein (130), das in Fasern (142) umgewandelt werden soll;
das Transportieren der Charge zu einem Schmelzofen, wobei der Schmelzofen zumindest teilweise von einer ersten elektrischen Induktionsspule (105) umgeben ist;
das Anlegen von Wechselstrom an die erste Induktionsspule (105), wodurch bewirkt wird, dass die Charge auf eine Temperatur erhitzt wird, die höher ist als der Schmelzpunkt aller Mineralien in der Charge, um eine homogene Gesteinsschmelze in mindestens einem Teil der Charge zu erzeugen;
das Fließenlassen der homogenen Gesteinsschmelze in eine Konditionierungskammer (108) durch eine Öffnung in einem oberen Teil einer Wand des Schmelzofens, wobei der Konditionierungsofen (108) zumindest teilweise von einer zweiten Induktionsspule (109) umgeben ist;
das Anlegen eines elektrischen Stroms an die zweite Induktionsspule (109), wodurch bewirkt wird, dass ein konduktives Rühren der Gesteinsschmelze unterdrückt und eine Temperatursenkung ermöglicht wird, um eine konditionierte Gesteinsschmelze zu erzeugen;
das Fließenlassen der konditionierten Gesteinsschmelze in eine Vielzahl von Faserbildungskammern (125), wobei jede Faserbildungskammer (125) zumindest teilweise von einer dritten Induktionsspule (113) umgeben ist;
das Anlegen von elektrischem Strom an die dritten Induktionsspulen (113), der bewirkt, dass die konditionierte Schmelze auf Faserbildungstemperatur gebracht und gehalten wird;
das Fließenlassen der konditionierten Schmelze aus den Faserbildungskammern (125) durch eine Vielzahl von Öffnungen in einer Bodenfläche einer Faserbildungskammer (125), um Fasern (142) zu erzeugen, die aus mindestens einem Teil der Öffnungen extrudiert werden, wodurch Fasern (142) gebildet werden.

8. Verfahren nach Anspruch 7, wobei der zerkleinerte, rohe Basalt oder das vulkanische Gestein in einem Chargenlader (101) vorgewärmt wird, bevor es zum Schmelzofen transportiert wird; und/oder wobei der Schmelzofen in eine erste Zone (132) und eine zweite Zone (134) unterteilt ist und wobei die homogene Gesteinsschmelze durch eine Öffnung in der Wand der zweiten Zone (134) des Schmelzofens in die Konditionierungskammer (108) eintritt, wobei die erste Zone (132) optional von der zweiten Zone (134) durch eine Unterlauf-Leitwandung (103) getrennt ist; und/oder wobei das Verfahren ferner das Schockkühlen der Fasern (142) durch Sprühen eines Wassernebels auf die Fasern (142), wenn sie aus den Öffnungen austreten, umfasst; und/oder wobei das Verfahren ferner das Zusammenfassen einzelner Fasern (142) zu einer Vielzahl von Strängen mit einem Sammelschuh (145) und, optional, das Aufwickeln eines oder mehrerer der Stränge auf einem Wickler (123) umfasst.

9. Verfahren nach Anspruch 7, ferner umfassend die Herstellung von Fasern (142) in einem kontinuierlichen Prozess, indem eine zweite und weitere Mengen an zerkleinertem, rohem Basalt oder vulkanischem Gestein (130), die in Fasern umgewandelt werden sollen, gewonnen werden und der zerkleinerte, rohe Basalt oder das vulkanische Gestein (130) zum Schmelzofen transportiert wird, um den Fluss der homogenen Gesteinsschmelze von dem Schmelzofen zu den Faserbildungskammern (125) aufrechtzuerhalten, wobei erhitzte Gase optional aus dem Schmelzofen abgezogen und in den Chargenlader (101) geleitet werden, um den zerkleinerten, rohen Basalt oder das vulkanische Gestein (130) in dem Chargenlader (101) vorzuwärmen.

10. Das Verfahren nach Anspruch 7, ferner umfassend die Steuerung der Temperatur in der Schmelzofen-Konditionierungskammer (108) und in den Faserbildungskammern (125) mit einem Computer; wobei der Computer Temperaturdaten von Temperatursensoren (120) empfängt, die in einem oder in mehreren von dem Schmelzofen, der Konditionierungskammer (108) und den Faserbildungskammern (125) angeordnet sind, und den Leistungspegel und die Wechselstromfrequenz auf der Grundlage der von den Temperatursensoren (120) empfangenen Daten steuert.

11. Verfahren nach Anspruch 1 oder 7, wobei die Faserbildungskammern (125) eine zylindrische Form haben.

12. Vorrichtung (100) zur Herstellung von Fasern (142), umfassend:
einen Schmelzofen, der mit einer Öffnung zur Aufnahme von Chargen von rohem Basalt oder vulkanischem Gestein (130) konfiguriert ist, wobei der Schmelzofen eine Schmelzkammer (102) umfasst, die in eine erste Zone (132) zur Aufnahme von geladenen Chargen und eine zweite Zone (134) für vorbereitete Schmelze unterteilt ist, wobei die erste Zone (132) und die zweite Zone (134) durch eine Unterlauf-Leitwandung (103) unterteilt sind, wobei eine Wand der zweiten Zone eine Austrittsöffnung bildet, und wobei die Austrittsöffnung näher an einer Oberseite der Schmelzkammer als an einem Durchgang unter der Unterlauf-Leitwandung (103) angeordnet ist;
eine erste Induktionsspule (105), die zumindest teilweise um den Schmelzofen herum angeordnet ist;
einen ersten Generator (104) und einen ersten Hochfrequenzwandler, der elektrisch mit der ersten Induktionsspule (105) verbunden ist;
einen ersten Kühlmantel, der in den Wänden des Schmelzofens angeordnet ist, wobei der erste Kühlmantel in Fluidverbindung mit einer ersten Wasserversorgungs- und Wärmetauschereinheit (107) steht;
eine Konditionierungskammer (108), die einen horizontalen Kanal mit einem ersten Ende und einem zweiten Ende umfasst, wobei die Konditionierungskammer (108) durch die Austrittsöffnung in Fluidverbindung mit der zweiten Zone (134) steht und wobei eine Bodenwand der Konditionierungskammer (108) eine Vielzahl von Öffnungen in beabstandeter Beziehung entlang einer Länge der Konditionierungskammer (108) in Richtung des zweiten Endes des horizontalen Kanals bildet;
eine zweite Induktionsspule (109), die zumindest teilweise um die Konditionierungskammer (108) herum angeordnet ist;
einen zweiten Generator (127) und einen zweiten Hochfrequenzwandler, die elektrisch mit der zweiten Induktionsspule (108) verbunden sind;
einen zweiten Kühlmantel, der in den Wänden der Konditionierungskammer (108) angeordnet ist, wobei der zweite Kühlmantel in Fluidverbindung mit einer zweiten Wasserversorgungs- und Wärmetauschereinheit (111) steht;
eine Vielzahl von Faserbildungskammern (125), die unterhalb der Konditionierungskammer (108) angeordnet sind und jeweils in Fluidverbindung mit der Konditionierungskammer (108) durch die jeweilige Vielzahl von Öffnungen in der Bodenwand der Konditionierungskammer (108) stehen, wobei jede Faserbildungskammer (125) in der Vielzahl von Faserbildungskammern (125) eine faserbildende Oberfläche umfasst, die sich im Boden jeder Faserbildungskammer (125) befindet, wobei die faserbildende Oberfläche eine Vielzahl von Öffnungen umfasst, die so bemessen und konfiguriert sind, dass sie jeweils eine Faser aus Gesteinsschmelze bilden, wenn die Gesteinsschmelze durch die jeweiligen Öffnungen hindurchgeht;
eine dritte Induktionsspule (113), die zumindest teilweise um die Vielzahl der Faserbildungskammern (125) herum angeordnet ist;
einen dritten Generator (140) und einen dritten Hochfrequenzwandler, die elektrisch mit der dritten Induktionsspule (113) verbunden sind; und
einen dritten Kühlmantel, der in den Wänden der Vielzahl von Faserbildungskammern (125) angeordnet ist, wobei der dritte Kühlmantel in Fluidverbindung mit einer dritten Wasserversorgungs- und Wärmetauschereinheit (110) steht.

13. Vorrichtung nach Anspruch 12, ferner umfassend einen Chargenlader (101), der einen Trichter zur Aufnahme von zerkleinertem Basalt oder vulkanischem Gestein (130) und zum Einbringen des zerkleinerten Basalts oder vulkanischen Gesteins (130) in die erste Zone (132) des Schmelzofens umfasst, und der optional ferner einen Luftkanal (126), der die zweite Zone (134) mit der Chargenladevorrichtung (101) verbindet, und eine Pumpe (106) umfasst, die so konfiguriert ist, dass sie Gase aus der Schmelzkammer (102) ansaugt und die Gase an den Chargenlader (101) liefert; und/oder ferner umfassend eine Vielzahl von Temperatursensoren (120), die sich in dem Schmelzofen, der Konditionierungskammer (108) und in einer oder mehreren Faserbildungskammern (125) befinden; und/oder ferner umfassend eine Vielzahl von Wassersprühern (146), die so konfiguriert sind, dass sie Nebel auf Filamente sprühen, wenn diese aus den Öffnungen austreten; und/oder ferner umfassend einen oder mehrere Sammelschuhe (145), die jeweils so konfiguriert sind, dass sie Fasern aus einer der Faserbildungskammern (125) konsolidieren, und optional einen oder mehrere Wickler (123), die so konfiguriert sind, dass sie Filament von einem oder mehreren der Schuhe (145) empfangen; und/oder ferner umfassend einen Computer, der so konfiguriert ist, dass er Temperatur- und Wasserflussdaten von der Vorrichtung (100) empfängt und den ersten Generator (104), den zweiten Generator (127) und den dritten Generator (140), den ersten Hochfrequenzwandler, den zweiten Hochfrequenzwandler und den dritten Hochfrequenzwandler steuert; und die erste Wasserversorgung (107), die zweite Wasserversorgung (111) und die dritte Wasserversorgung (110); wobei der Chargenlader (101) optional einen Motor (128) umfasst, der so konfiguriert ist, dass er den Trichter in Vibration versetzt, um das Entleeren des Trichters zu erleichtern.

14. Vorrichtung nach Anspruch 12, wobei einer oder mehrere von dem ersten Kühlmantel, dem zweiten Kühlmantel und dem dritten Kühlmantel Kupfer- oder Edelstahlrohre umfassen, die in Fluidverbindung mit einer oder mehreren Wasserversorgungs- und Wärmetauscheinheiten (107, 110, 111) stehen; und/oder wobei mindestens einer von dem ersten Generator (104), dem zweiten Generator (127) und dem dritten Generator (140) eine Leistung von 500 kW bis 10 MW bereitstellt und wobei mindestens einer von dem ersten Hochfrequenzwandler, dem zweiten Hochfrequenzwandler und dem dritten Hochfrequenzwandler es ermöglicht, dass die elektrische Leistung mit einer Frequenz von 100 kHz bis 30 MHz bereitgestellt wird; und/oder wobei mindestens einer von dem ersten Generator (104), dem zweiten Generator (127) und des dritten Generator (140) eine Leistung von 50 kW bis 500 kW bereitstellt und wobei mindestens einer von dem ersten Hochfrequenzwandler, dem zweiten Hochfrequenzwandler und dem dritten Hochfrequenzwandler es ermöglicht, dass die elektrische Leistung mit einer Frequenz von 60 Hz bis 100 kHz bereitgestellt wird; und/oder wobei jede der Wärmetauscher-Einheiten einen Luftkühler oder einen Kühlturm umfasst; und/oder wobei jede faserbildende Oberfläche eine Metallplatte umfasst, wobei die Metallplatte optional Platin oder eine Platinlegierung umfasst; und/oder wobei jede der faserbildenden Oberflächen 100 bis 4000 Öffnungen umfasst; und/oder wobei die Faserbildungskammern (125) eine zylindrische Form haben und wobei die faserbildende Oberfläche rund ist und im Wesentlichen die gesamte Bodenfläche der Faserbildungskammer (125) bildet.

## Revendications

1. Procédé de production de fibres à partir de basalte brut ou de roches ignées,
procédé consistant à :
- ajouter un volume de basalte brut ou de roches ignées broyées (130) à une première zone (132) de la chambre du four de fusion (102),
* la première zone (132) de la chambre du four de fusion (102) étant au moins en partie entourée d'une première bobine électrique d'induction (105),
- appliquer un premier courant alternatif à la première bobine d'induction (105) pour chauffer la première bobine d'induction efficacement pour chauffer le volume de basalte brut ou de roches ignées, broyées (130) ajoutés à la première zone (132) et produire un bain de fusion de roches homogène dans au moins une partie du volume du basalte brut ou de roches ignées (130),
- faire passer au moins partiellement la partie fondue de roches, homogène, à travers une première chambre de formation de fibres (125),
- faire passer au moins partiellement une partie du bain de roches au moins d'une première chambre de formation de fibres (125) à travers des orifices de formation de fibres en contrôlant la température efficace pour produire des fibres (142),
* la chambre de formation de fibres (125) étant au moins partiellement entourée d'une troisième bobine d'induction électrique (113) et la température de la partie fondue homogène de roches de la première chambre de formation de fibres (125) est réglée au moins en partie par la puissance et la fréquence du courant électrique dans la troisième bobine d'induction (113).

2. Procédé selon la revendication 1,
selon lequel
on règle la température contrôlée des orifices de formation de fibres entre 20°C et 70°C de la température cible de façon à être comprise entre 30°C-60°C d'une température cible, et/ou
- le volume de basalte brut ou de roches ignées broyées (130) étant chauffé à une température d'environ 1300°C jusqu'à environ 3000°C dans la chambre du four (102).

3. Procédé selon la revendication 1,
consistant en outre
à faire passer au moins partiellement une fraction de la partie fondue de roches homogènes à une chambre de conditionnement (108) au moins partiellement entourée par une seconde bobine d'induction électrique (109) et refroidir la partie fondue homogène de roches efficacement pour produire un flux laminaire au moins d'une partie de la chambre de conditionnement (108) avant de faire passer la partie de roches fondue homogènes dans la chambre de formation de fibres (125), en option,
la chambre de four (102) étant divisée en une première zone (132) et une seconde zone (134), et
* la seconde zone (134) est en communication fluidique avec la chambre de conditionnement (108) à travers une ouverture dans la paroi de la chambre de four (102),
* la première zone (132) et la seconde zone (134) en option étant séparées par un panneau immergé (103).

4. Procédé selon la revendication 1,
selon lequel
le volume de basalte brut ou de roches ignées, broyés (130) étant préchauffé avant d'être ajouté à la chambre du four (102) de façon que,
* le volume de basalte brut ou de roches ignées, broyées soit chauffé par les gaz de fumée de la chambre du four (102) avant en option d'être ajouté à la chambre de four (102),
* le volume de basalte brut broyé ou de roches ignées est tenu dans un chargeur de lots (101) avant d'être ajouté à la chambre de four (102), et
* les gaz de fumée de la chambre de four (102) sont pompés dans le chargeur de lots (101).

5. Procédé selon la revendication 1,
selon lequel
le basalte brut broyé ou les roches ignées (130) comprennent au moins un des éléments suivants : feldspars, quartz, feldspathoïdes, olivines, pyroxènes, amphiboles, et micas, ou
le basalte brut ou les roches ignées broyées comprennent :
rhyolite, dacite, andésite, basalte, diabase, granite, granodiorite, diorite ou gabbro.

6. Procédé selon la revendication 3,
consistant en outre à :
- mettre des capteurs de température (120) au moins dans la chambre de conditionnement (108) et dans la chambre de formation de fibres (125) et régler la température dans la chambre de conditionnement (108) et dans la chambre de formation de fibres (125) par la commande par ordinateur du courant électrique dans la seconde et la troisième bobine d'induction (109, 113) en se fondant sur la réaction reçue par l'ordinateur venant des capteurs de température (120).

7. Procédé de production de fibres comprenant les étapes consistant à :
- obtenir une quantité de basalte brut ou de roches ignées, broyées (130) pour les transformer en fibres (142),
- transporter le lot dans un foyer de fusion,
* le foyer de fusion étant au moins en partie entouré par une première bobine d'induction électrique (105),
- appliquer un courant alternatif à la première bobine d'induction (105) pour chauffer le lot à une température supérieure au point de fusion de tous les minéraux du lot pour produire un bain homogène de roches dans au moins une partie du lot,
- faire couler le bain homogène de roches dans une chambre de conditionnement (108) à travers un orifice dans la partie haute de la paroi du four de fusion,
* le four de conditionnement (108) étant au moins en partie entouré par une seconde bobine d'induction (109),
- appliquer un courant électrique à la seconde bobine d'induction (109) pour supprimer l'agitation par conduction du bain de roches et permettre à la température de diminuer pour obtenir un bain conditionné de roches,
- faire couler le bain conditionné de roches dans un ensemble de chambres de formation de fibres (125),
* chaque chambre de formation de fibres (125) étant au moins partiellement entourée par une troisième bobine d'induction (113),
- appliquer le courant électrique aux troisièmes bobines d'induction (113) pour atteindre et maintenir le bain conditionné à une température de formation de fibres,
- faire couler le bain conditionné des chambres de formation de fibres (125) à travers un ensemble d'orifices dans le fond d'une chambre de formation de fibres (125) pour produire des fibres (142) extrudées d'au moins une partie des orifices formant ainsi les fibres (142).

8. Procédé selon la revendication 7,
selon lequel
on préchauffe le basalte brut ou les roches ignées, broyées dans un chargeur de lots (101) avant d'être transporté dans le four de fusion et/ou le four de fusion est divisé en une première zone (132) et une seconde zone (134), et
le bain homogène de roche entre dans la chambre de conditionnement (108) par un orifice dans la paroi de la seconde zone (134) du four de fusion,
* la première zone (132) est en option, séparée de la seconde zone (134) par une cloison immergée (103), et/ou
* le procédé en outre consiste à un refroidissement brutal des fibres (142) en pulvérisant un brouillard d'eau sur les fibres (142) lorsqu'elles sortent des orifices, et/ou
le procédé consiste en outre à recueillir des fibres individuelles (142) en un ensemble de cordons avec un patin de collecte (145), en option enrouler un ou plusieurs cordons sur un enrouleur (123).

9. Procédé selon la revendication 7,
consistant en outre à
produire des fibres (142) selon un procédé continu en obtenant une seconde des quantités suivantes de basalte brut ou de roches ignées, broyés (130) pour les transformer en fibres et transporter le basalte brut ou les roches ignées broyées (130) dans un four de fusion pour maintenir le débit du bain de roches homogènes du four de fusion vers les chambres de formation de fibres (125),
- les gaz chauds étant évacués en option du four de fusion et envoyés dans le chargeur de lots (101) pour préchauffer le basalte brut ou les roches ignées, broyés (130) dans le chargeur de lots (101).

10. Procédé selon la revendication 7,
consistant en outre à :
- régler la température dans la chambre de conditionnement du four de fusion (108) et des chambres de formation de fibres (125) avec un ordinateur,
- l'ordinateur recevant les données de température des capteurs de température (120) placés dans un ou plusieurs fours de fusion, la chambre de combustion (108) et les chambres de formation de fibres (125) et commander le niveau de puissance et la fréquence alternative en s'appuyant sur les données reçues des capteurs de température (120).

11. Procédé selon la revendication 1 ou la revendication 7,
selon lequel
les chambres de formation de fibres (125) ont une forme cylindrique.

12. Appareil (100) pour produire des fibres (142) comprenant :
- un four de fusion configuré avec un orifice pour recevoir des lots de basalte brut ou de roches ignées (130),
* le four de fusion comprenant une chambre de fusion (102) divisée en une première zone (132) pour recevoir les lots de charge et une seconde zone (134) divisée par une cloison immergée (109),
* une paroi de la seconde zone formant un orifice de sortie, et
* l'orifice de sortie étant situé plus près du haut de la chambre de fusion qu'un passage sous la cloison immergée (103),
- une première bobine d'induction (105) étant placée au moins en partie autour du four de fusion,
- un premier générateur (104) et un premier convertisseur de hautes fréquences étant relié à la première bobine d'induction (105),
- une première chemise de refroidissement étant placée dans les parois du four de fusion, cette première chemise de refroidissement communiquant par une liaison fluidique avec une première alimentation en eau et un échangeur de chaleur (107),
- une chambre de conditionnement (108) comprenant un canal horizontal avec une première extrémité et une seconde extrémité, et
* la chambre de conditionnement (108) étant en communication fluidique avec la seconde zone (134) à travers l'orifice de sortie, et
* le fond de la chambre de combustion (108) formant un ensemble d'orifices espacés selon une longueur de la chambre de conditionnement (108) vers la seconde extrémité du canal horizontal,
- une seconde bobine d'induction (109) étant placée au moins en partie autour de la chambre de conditionnement (108),
- un second générateur (127) et un second convertisseur hautes fréquences étant reliés à la seconde bobine d'induction (108),
- une seconde chemise de refroidissement étant située dans les parois de la chambre de conditionnement (108),
cette seconde chemise de refroidissement étant en communication fluidique avec une seconde alimentation en eau et un échangeur de chaleur (111),
- un ensemble de chambres de formation de fibres (125) situées sous la chambre de conditionnement (108) et respectivement en communication fluidique avec la chambre de conditionnement (108) à travers l'ensemble respectif d'orifices dans le fond de la chambre de conditionnement (108),
* chaque chambre de formation de fibres (125) de l'ensemble des chambres de formation de fibres (125) comprenant une surface de formation de fibres dans le fond de chaque chambre de formation de fibres (125),
* la surface de formation de fibres comprenant un ensemble d'orifices dimensionnés et configurés chacun respectivement pour former une fibre à partir du bain de roches lorsque le bain de roches traverse les orifices respectifs,
- une troisième bobine d'induction (113) placée au moins en partie autour de l'ensemble des chambres de formation de fibres (125),
- un troisième générateur (140) et un troisième convertisseur hautes fréquences relié à la troisième bobine d'induction (113), et
- une troisième chemise de refroidissement située dans les parois de l'ensemble des chambres de formation de fibres (125),
- la troisième chemise de refroidissement est en communication fluidique avec une troisième alimentation en eau et avec un échangeur de chaleur (110).

13. Appareil selon la revendication 12,
comprenant en outre :
- un chargeur de lots (101) ayant une trémie recevant le basalte broyé ou les roches igneuses (130) et formant un flux de basalte ou de roches ignées (130) broyées dans la première zone (132) du four de fusion et en option, comprenant en outre un canal d'air (126) reliant la seconde zone (134) au chargeur de lots (101) et une pompe (106) pour extraire les gaz de la chambre de fusion (102) et distribuer les gaz dans le chargeur de lots (101) et/ou ayant en outre un ensemble de capteurs de température (120) situés dans le four de fusion, la chambre de conditionnement (108) et une ou plusieurs chambres de formation de fibres (125) ; et/ou comprenant en outre un ensemble de pulvérisateurs d'eau (146) pour pulvériser un brouillard sur les filaments qui sortent des orifices ; et/ou ayant en outre un ou plusieurs patins de collecte (145) configurés chacun pour consolider les fibres de l'une des chambres de formation de fibres (125) et en option, un ou plusieurs enrouleurs (123) pour recevoir le filament d'un ou plusieurs patins (145) et/ou ayant en outre un ordinateur configuré pour recevoir les données de température et de débit d'eau de l'appareil (100) et régler le premier générateur (104), le second générateur (127) et le troisième générateur (140), le premier convertisseur hautes fréquences, le second convertisseur hautes fréquences et le troisième convertisseur hautes fréquences et la première alimentation en eau (107), la seconde alimentation en eau (111) et la troisième alimentation en eau (110),
le chargeur de lots (101) ayant en option un moteur (128) configuré pour faire vibrer la trémie et faciliter le vidage de la trémie.

14. Appareil selon la revendication 12,
dans lequel
une ou plusieurs chemises parmi la première chemise de refroidissement, la seconde chemise de refroidissement et la troisième chemise de refroidissement comportent des tubes en cuivre ou en acier inoxydable en liaison fluidique avec une ou plusieurs alimentations en eau et les échangeurs de chaleur (107, 110, 111), et/ou
au moins un générateur parmi le premier générateur (104), le second générateur (127) et le troisième générateur (140) fournissent une puissance de 500 kW-10 MW, au moins l'un des convertisseurs parmi le premier convertisseur hautes fréquences, le second convertisseur hautes fréquences et le troisième convertisseur hautes fréquences permettent de fournir la puissance électrique à une fréquence de 100 kHz-30 MHz et/ou au moins l'un des générateurs parmi le premier générateur (104), le second générateur (127) et le troisième générateur (140) fournissent une puissance de 50 kW-500 kW, et
au moins l'un des convertisseurs de fréquences parmi le premier convertisseur hautes-fréquences, le second convertisseur hautes-fréquences et le troisième convertisseur hautes fréquences permettent de fournir la puissance électrique à une fréquence de 60 Hz-100 kHz ; et/ou chacun des échangeurs de chaleur comprend un refroidisseur à air ou une tour de refroidissement, et/ou
chacune des surfaces de formation de fibres se compose d'une plaque de métal, cette plaque de métal comprenant en option du platine ou un alliage de platine ; et/ou chacune des surfaces de formation de fibres a entre 100 et 4000 orifices et/ou les chambres de formation de fibres (125) sont de forme cylindrique et la surface de formation de fibres est ronde et constitue pratiquement toute la surface du fond de la chambre de formation de fibres (125).
